# EUROPEAN PATENT SPECIFICATION

(11) **EP 4 407 708 B1**
(45) Date of publication and mention of the grant of the patent: **11.11.2026**
(21) Application number: 22904651.1
(22) Date of filing: 07.12.2022
(51) Int. Cl.: H01M 4/133, H01M 4/36, H01M 4/587, H01M 4/62, H01M 10/0525, H01M 4/02

(54) **NEGATIVE ELECTRODE AND SECONDARY BATTERY INCLUDING THE SAME**
NEGATIVE ELEKTRODE UND SEKUNDÄRBATTERIE DAMIT
ELECTRODE NÉGATIVE ET BATTERIE SECONDAIRE LA COMPRENANT

(30) Priority: 08.12.2021 KR 20210174644
(43) Date of publication of application: 31.07.2024
(73) Proprietor: LG Energy Solution, Ltd., Seoul 07335 (KR)
(72) Inventor: KIM, Hyun Chul, Daejeon 34122 (KR); WOO, Sang Wook, Daejeon 34122 (KR)
(74) Representative: Hoffmann Eitle
(86) International application number: PCT/KR2022/019782
(87) International publication number: WO 2023/106822

(56) References cited:
- EP-A1- 3 054 509
- EP-A1- 3 503 267
- EP-A1- 3 754 763
- JP-A- 2016 048 668
- KR-A- 20160 014 539
- KR-A- 20170 075 661
- KR-A- 20190 102 612
- KR-A- 20190 115 834
- KR-B1- 100 853 888
- US-B1- 6 265 110

## Description

### TECHNICAL FIELD

### Cross-reference to Related Applications

This application claims the benefit of Korean Patent Application No. 10-2021-0174644, filed on December 8, 2021, in the Korean Intellectual Property Officef.

### Technical Field

The present invention relates to a negative electrode and a secondary battery including the same.

### BACKGROUND ART

With a dramatic increase in the use of fossil fuels, there is a growing demand for the use of alternative energy or clean energy, and in response, fields of power generation and energy storage using electrochemical reactions have been studied most actively.

Currently, secondary batteries are a representative example of an electrochemical element that utilizes electrochemical energy, and the extent of the usage thereof is increasing. Recently, along with technological advancements and the rising demand for portable devices such as portable computers, portable phones, cameras, and the like, there has been a sharp increase in demand for secondary batteries as sources of energy. In addition, a reduction in charging time is needed for greater convenience in the use of secondary batteries, and accordingly, excellent quick charging performance is required.

Typically, a secondary battery is composed of a positive electrode, a negative electrode, an electrolyte, and a separator. The negative electrode includes a negative electrode active material that allows lithium ions released from the positive electrode to be intercalated and deintercalated.

As the negative electrode active material, graphite-based active materials, for example, natural graphite, artificial graphite, or the like, are commonly used. Although typical natural graphite is beneficial in that the graphite is inexpensive and thus is highly cost-effective, the graphite is unbeneficial in that a large-scale irreversible reaction caused by the penetration or decomposition of an electrolyte takes place due to an irregular structure when the graphite is applied to a battery, and typical artificial graphite is beneficial in that the graphite exhibits excellent initial charge/discharge efficiency, but is unbeneficial in that the graphite exhibits lower discharge capacity than the natural graphite to have reduced battery capacity and energy density.

In order to overcome the issues described above, a negative electrode active material that is a mixture of typical natural graphite and artificial graphite, a negative electrode active material in which an amorphous carbon coating layer is formed on typical natural graphite or artificial graphite, and the like have been typically used. However, in this case, electrode roll pressing does not work well, thereby failing to reduce electrode thickness and cell thickness to cause degradation in energy density.

Japanese Patent Publication No. 2019-179687 discloses an artificial graphite-based negative electrode material and a negative electrode for a non-aqueous secondary battery including the same, but has failed to provide an alternative to the downsides described above.

### [Related Art Document]

### [Patent Document]

Japanese Patent Publication No. 2019-179687
Japanese Patent Publication No. 2016-48668 A provides a negative active material including artificial graphite A having an average particle diameter of over 15 to 25 µm, and graphite B including graphite particles having an average particle diameter of 8 to 15 µm and coated with amorphous carbon.

US patent No. 6,265,110 B1 provides a negative electrode structure being of at least 40% by weight of natural flake graphite, having an La-value of at least 300 nm and/or an Lc-value in the range 50-150 nm and an La-Lc-ratio of at least 2.

### DISCLOSURE OF THE INVENTION

### TECHNICAL PROBLEM

An aspect of the present invention provides a negative electrode having high energy density, and excellent quick charging performance and output performance.

Another aspect of the present invention provides a secondary battery including the negative electrode described above.

### TECHNICAL SOLUTION

According to an aspect of the present invention, there is provided a negative electrode including a negative electrode current collector, and a negative electrode active material layer disposed on at least one surface of the negative electrode current collector, wherein the negative electrode active material layer includes a negative electrode active material, the negative electrode active material includes a first negative electrode active material and a second negative electrode active material, the first negative electrode active material is coated artificial graphite particles including primary artificial graphite particles and an amorphous carbon coating layer positioned on the primary artificial graphite particles, the second negative electrode active material is uncoated artificial graphite particles in the form of secondary particles in which two or more primary artificial graphite particles are assembled, a ratio of an average particle diameter (D₅₀) of the second negative electrode active material to an average particle diameter (D₅₀) of the first negative electrode active material ranges from 1.2 to 4.7, and in XRD analysis of the negative electrode active material, a crystallite size La (100) in an a-axis direction ranges from 200 nm to 300 nm, and a crystallite size Lc (002) in a c-axis direction ranges from 50 nm to 100 nm.

In addition, according to another aspect of the present invention, there is provided a secondary battery including the above-described negative electrode, a positive electrode facing the negative electrode, a separator disposed between the negative electrode and the positive electrode, and an electrolyte.

### ADVANTAGEOUS EFFECTS

A negative electrode of the present invention includes a first negative electrode active material which is coated artificial graphite particles including primary artificial graphite particles and an amorphous carbon coating layer, and a second negative electrode active material which is uncoated artificial graphite particles in the form of secondary particles in which primary artificial graphite particles are assembled, and a ratio of an average particle diameter (D₅₀) of the first negative electrode active material and the second negative electrode active material is regulated to a specific range. According to the negative electrode of the present invention, the first negative electrode active material may be disposed and packed in an empty space between the second negative electrode active materials, and the second negative electrode active material, which is relatively soft, improves roll pressing properties to increase the energy density of the negative electrode and also the first negative electrode active material in the form that an amorphous carbon coating layer is formed on primary artificial graphite particles is disposed between the second negative electrode active materials to contribute to improving the quick charging performance and reducing the resistance of the negative electrode, and accordingly, a negative electrode and a secondary battery having high energy density, and excellent output properties and quick charging performance are achievable.

### MODE FOR CARRYING OUT THE INVENTION

Hereinafter, the present invention will be described in detail to aid in understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. The singular forms are intended to include the plural forms as well, unless the context clearly indicates otherwise.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

D₅₀, as used herein, may be defined as a particle diameter at a cumulative volume of 50% in a particle size distribution curve (curve on the graph of a particle size distribution) of each particle. The D₅₀ may be measured, for example, by using a laser diffraction method. The laser diffraction method generally allows the measurement of a particle diameter ranging from a submicron level to a few mm and may produce highly repeatable and high-resolution results.

### <Negative electrode>

The present invention relates to a negative electrode, and particularly, to a negative electrode for a lithium secondary battery.

The negative electrode includes a negative electrode current collector, and a negative electrode active material layer disposed on at least one surface of the negative electrode current collector, wherein the negative electrode active material layer includes a negative electrode active material, the negative electrode active material includes a first negative electrode active material and a second negative electrode active material, the first negative electrode active material is coated artificial graphite particles including primary artificial graphite particles and an amorphous carbon coating layer positioned on the primary artificial graphite particles, the second negative electrode active material is uncoated artificial graphite particles in the form of secondary particles in which two or more primary artificial graphite particles are assembled, a ratio of an average particle diameter (D₅₀) of the second negative electrode active material to an average particle diameter (D₅₀) of the first negative electrode active material ranges from 1.2 to 4.7, and in XRD analysis of the negative electrode active material, a crystallite size La (100) in an a-axis direction ranges from 200 nm to 300 nm, and a crystallite size Lc (002) in a c-axis direction ranges from 50 nm to 100 nm.

The negative electrode of the present invention includes a first negative electrode active material which is coated artificial graphite particles including primary artificial graphite particles and an amorphous carbon coating layer, and a second negative electrode active material which is uncoated artificial graphite particles in the form of secondary particles in which primary artificial graphite particles are assembled, and a ratio of an average particle diameter (D₅₀) of the first negative electrode active material and the second negative electrode active material is regulated to a specific range. According to the negative electrode of the present invention, the first negative electrode active material may be disposed and packed in an empty space between the second negative electrode active materials, and the second negative electrode active material, which is relatively soft, improves roll pressing properties to increase the energy density of the negative electrode and also the first negative electrode active material in the form that an amorphous carbon coating layer is formed on primary artificial graphite particles is disposed between the second negative electrode active materials to contribute to improving the quick charging performance and reducing the resistance of the negative electrode, and accordingly, a negative electrode and a secondary battery having high energy density, and excellent output properties and quick charging performance are achievable.

The negative electrode includes a negative electrode current collector, and a negative electrode active material layer disposed on at least one surface of the negative electrode current collector.

The negative electrode current collector is not particularly limited as long as it has conductivity without causing chemical changes in batteries. For example, copper, stainless steel, aluminum, nickel, titanium, fired carbon, or aluminum or stainless steel that is surface-treated with one of carbon, nickel, titanium, silver, or the like may be used as the negative electrode current collector. Specifically, a transition metal which well adsorbs carbon such as copper and nickel may be used as the negative electrode current collector. The negative electrode current collector may have a thickness of 6 µm to 20 µm, but the thickness of the current collector is not limited thereto.

The negative electrode active material layer is disposed on at least one surface of the negative electrode current collector. Specifically, the negative electrode active material layer may be disposed on one surface or both surfaces of the negative electrode current collector.

The negative electrode active material layer includes a negative electrode active material, The negative electrode active material includes a first negative electrode active material and a second negative electrode active material, In this case, a ratio of an average particle diameter (D₅₀) of the second negative electrode active material to an average particle diameter (D₅₀) of the first negative electrode active material is 1.2 to 4.7.

According to the present invention, the first negative electrode active material is coated artificial graphite particles in which an amorphous carbon coating layer is formed on primary artificial graphite particles, the second negative electrode active material is uncoated artificial graphite particles in the form of secondary particles, and the negative electrode active material layer includes the first negative electrode active material and the second negative electrode active material in an appropriate average particle diameter (D₅₀) ratio. The second negative electrode active material is in the form of secondary particles, and may thus exhibit excellent quick charging performance and excellent roll pressing performance as well. In addition, the first negative electrode active material has an average particle diameter (D₅₀) that is properly smaller than that of the second negative electrode active material, and accordingly, when disposed between the second negative electrode active materials, may allow the negative electrode active material layer to have improved packing properties. In addition, the first negative electrode active material includes an amorphous carbon coating layer disposed on a surface, and accordingly, when disposed between the second negative electrode active materials, may contribute to improving charge mobility and reducing resistance to allow the negative electrode according to the present invention to exhibit an improvement in energy density, quick charging performance, and output performance according to excellent roll pressing properties.

When a ratio of the average particle diameter (D₅₀) of the second negative electrode active material to the average particle diameter (D₅₀) of the first negative electrode active material is less than 1.2, the first negative electrode active material may not be packed to a desired level between the second negative electrode active materials to lead to a risk of degradation in energy density, and the small particle size of the first negative electrode active material may clog voids to lead to a risk of degradation in quick charging performance and output performance. Meanwhile, when a ratio of the average particle diameter (D₅₀) of the second negative electrode active material to the average particle diameter (D₅₀) of the first negative electrode active material is greater than 4.7, fine powder generated by particle breakage upon roll pressing may lead to a risk of degradation in quick charging performance and output performance.

Specifically, a ratio of the average particle diameter (D₅₀) of the second negative electrode active material to the average particle diameter (D₅₀) of the first negative electrode active material may range from 2.0 to 3.5, and in this case, the energy density, quick charging performance, and output performance described above may be further improved.

The first negative electrode active material is coated artificial graphite particles including primary artificial graphite particles and an amorphous carbon coating layer positioned on the primary artificial graphite particles.

The primary artificial graphite particles may indicate artificial graphite particles in the form of a single particle, and is used as a term distinguished from "secondary artificial graphite particles", which are an aggregate in which two or more primary artificial graphite particles are aggregated through an intentional assembly or bonding process.

The first negative electrode active material (coated artificial graphite particles) according to the present invention includes a amorphous carbon coating layer harder than graphite, and accordingly, when disposed between the second negative electrode active materials, the first negative electrode active material may keep a shape thereof even against roll pressing, and this may contribute to improving the overall charge mobility of the negative electrode, reducing resistance, and improving quick charging performance. In addition, the first negative electrode active material has an average particle diameter (D₅₀) that is desirably smaller than that of the second negative electrode active material, the negative electrode active material layer may have improved packing properties to increase the energy density of the negative electrode. When an amorphous carbon coating layer is not included in the first negative electrode active material, conductivity may be reduced, and a pore structure may be affected after roll pressing to lead to a risk of degradation in quick charging performance and output performance.

The first negative electrode active material may include the amorphous carbon coating layer in an amount of 1 wt% to 10 wt%, specifically 3 wt% to 5 wt%.

The amorphous carbon coating layer may be formed after a carbon precursor to the primary artificial graphite particles is provided and then heat treated. The carbon precursor may be polymer resins such as sucrose, a phenol resin, a naphthalene resin, a polyvinyl alcohol resin, a furfuryl alcohol resin, a polyacrylonitrile resin, a polyamide resin, a furan resin, a cellulose resin, a styrene resin, a polyimide resin, an epoxy resin, a vinyl chloride resin, and polyvinyl chloride; pitches such as coal-based pitch, petroleum-based pitch, and mesophase pitch; and the like, but is not limited thereto. The heat-treating may be performed at a temperature of 1,000 °C to 1,800 °C.

The first negative electrode active material may have an average particle diameter (D₅₀) ranging from 4 µm to 13 µm, specifically 7 µm to 10 µm. Within the above range, the first negative electrode active material may have a specific surface area which may be reduced to a desirable level, and may thus contribute to improving the capacity of a negative electrode, and also densely fill an empty space formed between the second negative electrode active materials, which will be described later, to improve roll pressing performance.

The first negative electrode active material may have a BET specific surface area ranging from 0.1 m²/g to 3.0 m²/g, specifically 0.5m ²/g to 2.0 m²/g, and within the above range, it is desirable in that an electrolyte side reaction may be minimized and high-temperature output performance may be improved. The BET specific surface area may be measured by using a BEL Sorption instrument (BEL Japan).

The second negative electrode active material is uncoated artificial graphite particles in the form of secondary particles in which two or more primary artificial graphite particles are assembled. The second negative electrode active material is artificial graphite particles in the form of secondary particles, and may have excellent quick charging performance and excellent roll pressing performance due to voids formed between primary artificial graphite particles present therein.

The uncoated artificial graphite particles are artificial graphite particles which are not coated, and may indicate that the artificial graphite is entirely exposed on a surface. More specifically, the uncoated artificial graphite particles may be formed of uncoated artificial graphite particles or may not include a separate coating layer (an amorphous carbon coating layer and the like). When secondary artificial graphite particles in which an amorphous carbon coating layer is formed are used as the second negative electrode active material, the negative electrode active material layer is not pressed well even through roll pressing, and thus fails to ensure energy density, and exhibits particle breakage to have an increased specific surface area, a greater electrolyte side reaction, and clogged voids, leading to degradation in quick charging performance and output performance.

The uncoated artificial graphite particles may be prepared as follows: coke and binder pitch are mixed, and then heat treated at high temperature to prepare primary artificial graphite particles, and the primary artificial graphite particles are mixed with binder pitch, and then heat treated at high temperature, specifically at 2,500 °C to 3,200 °C . Through the high-temperature heat treatment, the binder pitch is graphitized, and accordingly, uncoated artificial graphite particles having no coating material such as amorphous carbon are achievable. In the high-temperature heat treatment, a total heat treatment time (time considering an increase in temperature, keeping heat treatment temperature, and a decrease in temperature) is preferably 1 week to 3 weeks, and the time for keeping heat treatment temperature is preferably 48 hours to 70 hours, so that graphitization may sufficiently be performed. The coke may be needle coke and/or isotropic coke, and the coke and the binder pitch may be mixed in a weight ratio of 80:20 to 95:5, and the primary particles and the binder pitch may be mixed in a weight ratio of 80:20 to 95:5.

The uncoated artificial graphite particles may be formed as two or more primary artificial graphite particles having an average particle diameter (D₅₀) ranging from 7 µm to 10 µm are assembled. When the average particle diameter of the primary artificial graphite particles included in the uncoated artificial graphite particles is within the above range, the capacity may be regulated to a desired level, and also degradation in quick charging performance due to an excessively large average particle diameter (D₅₀) of the primary artificial graphite particles may be prevented. More specifically, in the uncoated artificial graphite particles, the primary artificial graphite particles have an average particle diameter (D₅₀) of 8 µm to 9 µm, specifically. When the average particle diameter of the primary artificial graphite particles is within the above range, expression capacity may be sufficiently maintained and charging properties such as quick charging may remain high.

The second negative electrode active material may have an average particle diameter (D₅₀) of 15 µm to 25 µm, specifically 17 µm to 22 µm. Within the above range, degradation in quick charging performance due to excessive particle size is prevented, and a specific surface area of an active material is regulated to a desirable level to be desirable for improving high-temperature performance.

The second negative electrode active material may have a BET specific surface area of 0.1 m²/g to 3.0 m²/g, specifically 0. 5 m²/g to 2.0 m²/g, and within the above range, it is desirable in that an electrolyte side reaction may be minimized and high-temperature output performance may be improved. The BET specific surface area may be measured by using a BEL Sorption instrument (BEL Japan).

The first negative electrode active material and the second negative electrode active material may independently have at least one type selected from the group consisting of a plate type, a needle type, and a polygonal type, and in this case, the negative electrode active material may be densely disposed on a negative electrode and the packing property may be improved, which may preferably work to improve the energy density of the negative electrode.

The negative electrode active material layer may include the first negative electrode active material and the second negative electrode active material in a weight ratio ranging from 10:90 to 80:20, specifically 25:75 to 50:50. Within the above range, it is desirable in terms of being able to well maintain the structure of voids even in a high energy density electrode.

The negative electrode active material may have a tap density ranging from 1.00 g/cm³ to 1.20 g/cm³, specifically 1.03 g/cm³ to 1.05 g/cm³. When the tap density of the negative electrode active material is within the range described above, the tap density is sufficiently high to coat an electrode to have a low thickness.

The tap density is a mass per volume of powder formed of particles and refers to a density in which voids between particles are filled through constant tapping or vibration. Factors affecting the tap density include particle size distribution, moisture amount, particle shape, aggregation property, and the like. The fluidity and compressibility of a material may be predicted through the tap density. The tap density may be measured based on ASTM D4781 and may be calculated using the equation TD=W/V (TD: tap density, W: sample weight (g), V: sample volume after tapping).

The negative electrode active material may have a BET specific surface area ranging from 0.1m²/g to 3.0m²/g, specifically 0.5 m²/g to 2.0 m²/g, more specifically 1.3 m²/g to 1.5 m²/g, and within the above range, it is desirable in that an electrolyte side reaction may be minimized and high-temperature output performance may be improved. The BET specific surface area may be measured by using a BEL Sorption instrument (BEL Japan).

The negative electrode active material may have an average particle diameter (D₅₀) ranging from 12 µm to 20 µm, specifically 14 µm to 18 µm.

In XRD analysis (X-ray diffraction analysis) of the negative electrode active material, a crystallite size La (100) in an a-axis direction is 200 nm to 300 nm, and a crystallite size Lc (002) in a c-axis direction is 50 nm to 100 nm. Within the above range, the crystallinity of the particles is regulated to a sufficient degree to be desirable for improving capacity expression and quick charging performance.

In the present description, the La (100) indicates a width in an a-axis of a crystallite calculated with respect to a diffraction line for a (100) crystal plane in the XRD analysis of the particles, that is, a crystallite size in the (100) plane in the a-axis direction, and the Lc (002) indicates a width in a c-axis of a crystallite calculated with respect to a diffraction line for a (002) crystal plane in the XRD analysis of the particles, that is, a crystallite size in the (002) plane in the c-axis direction.

The negative electrode active material may specifically have a crystallite size La (100) in the a-axis direction of 210 nm to 290 nm, more specifically 230 nm to 270 nm as analyzed through XRD. In addition, the coated artificial graphite particles may have a crystallite size Lc (002) in the c-axis direction of 60 nm to 90 nm, more specifically 65 nm to 85 nm as analyzed through XRD.

In the present description, La (100) and Lc (002) are measured through XRD analysis. Specifically, the XRD analysis may use Bruker AXS D4 Endeavor XRD (voltage: 40 kV, current: 40 mA), and measurement may be performed in the condition of Cu Ka radiation (wavelength: 1.54 Å) at a scanning speed of 87.5 s/0.02° in a range from 10° to 90° of 2θ. Among measurement results, the full width at half-maximum (FWHM) of a peak in the (002) crystal plane, which appears in the vicinity of 20° to 30° of 2θ, and the FWHM of a peak in the (100) crystal plane, which appears in the vicinity of 38° to 50°, may be measured, and a Lc (002) value and a La(100) value may be calculated and obtained through the Scherrer equation.

The negative electrode active material layer may include the negative electrode active material in an amount of 80 wt% to 99 wt%, preferably, 88 wt% to 98 wt%.

The negative electrode active material layer may further include a binder, a conductive agent, and/or a thickener in addition to the above-described negative electrode active material.

The binder is a component that assists in the binding between the active material and/or the current collector, wherein the binder may commonly be included in an amount of 1 wt% to 30 wt%, for example, 1 wt% to 10 wt% in the negative electrode active material layer.

The binder may include at least one selected from the group consisting of polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, and a fluorine rubber, preferably, at least one selected from polyvinylidene fluoride and a styrene-butadiene rubber.

Any thickener used in typical lithium secondary batteries may be used as the thickener, and an example thereof is carboxymethyl cellulose (CMC).

The conductive agent is a component for further improving the conductivity of the negative electrode active material, wherein the conductive agent may be included in an amount of 1 wt% to 30 wt%, for example, 1 wt% to 10 wt% in the negative electrode active material layer.

Any conductive agent may be used without particular limitation so long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used. Specific examples of a commercially available conductive material may include acetylene black series such as products manufactured by Chevron Chemical or Denka black manufactured by Denka Singapore private limited, products manufactured by Gulf Oil, Ketjen black, EC series manufactured by Armak, Vulcan XC-72 manufactured by Cabot, and Super P manufactured by Timcal.

The negative electrode active material layer may have a thickness of 10 µm to 150 µm, specifically 50 µm to 100 µm, but is not limited thereto.

The negative electrode may have a roll pressing density of 1.5 g/cm³ to 2.0 g/cm³, specifically 1.6 g/cm³ to 1.8 g/ cm³. According to the present invention, a negative electrode includes two types of artificial graphite particles according to a desirable average particle diameter (D₅₀) ratio, and accordingly, a negative electrode having excellent energy density and, in particular, improved quick charging performance even at the roll pressing density described above may be achievable.

A negative electrode slurry is prepared by mixing the above-described negative electrode active material and at least one selected from the binder, the conductive agent, and the thickener in a solvent, and the negative electrode active material layer may be prepared by coating the negative electrode current collector with the negative electrode slurry, and roll pressing and drying the coated negative electrode current collector.

The solvent may include water or an organic solvent, such as N-methyl-2-pyrrolidone (NMP), and may be used in an amount such that desirable viscosity is obtained when the negative electrode active material as well as optionally the binder and the conductive agent are included. For example, the solvent may be included in an amount such that a concentration of a solid content including the negative electrode active material as well as optionally at least one selected from the binder, the thickener, and the conductive agent is in a range of 50 wt% to 95 wt%, for example, 70 wt% to 90 wt%.

### <Secondary battery>

Furthermore, the present invention provides a secondary battery including the negative electrode described above, more particularly, a lithium secondary battery.

The secondary battery may include the above-described negative electrode, a positive electrode, a separator disposed between the negative electrode and the positive electrode, and an electrolyte.

The positive electrode may face the negative electrode.

The positive electrode may include a positive electrode current collector, and a positive electrode active material layer disposed on the positive electrode current collector.

A positive current collector generally used in the art may be used without limitation as the positive electrode current collector, and, for example, the positive electrode current collector is not particularly limited so long as it has high conductivity without causing chemical changes in secondary batteries. For example, the positive electrode current collector may include at least one selected from copper, stainless steel, aluminum, nickel, titanium, fired carbon, and an aluminum-cadmium alloy, preferably, aluminum.

The positive electrode current collector may have fine irregularities on a surface thereof to improve bonding strength of a positive electrode active material, and the positive electrode current collector may be used in various forms such as a film, a sheet, a foil, a net, a porous body, a foam body, and a non-woven fabric body.

The positive electrode current collector may generally have a thickness of 3 µm to 500 µm.

The positive electrode active material layer may include a positive electrode active material.

The positive electrode active material is a compound capable of reversibly intercalating and deintercalating lithium, and the positive electrode active material may specifically include a lithium composite metal oxide including lithium and at least one metal such as cobalt, manganese, nickel, or aluminum. More specifically, the lithium composite metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li (Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li (Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included. Among these materials, in terms of improvement of capacity characteristics and stability of batteries, the lithium composite metal oxide may include LiCoO₂, LiMnO₂, LiNiO₂, lithium nickel manganese cobalt oxide (e.g., Li(Ni_{0.6}Mn_{0.2}CO_{0.2})O₂, Li(Ni_{0.5}Mn_{0.3}Co_{0.2})O₂, or Li(Ni_{0.8}Mn_{0.1}Co_{0.1})O₂), or lithium nickel cobalt aluminum oxide (e.g., Li (Ni_{0.8}Co_{0.15}Al_{0.05})O₂, etc.), and, in consideration of a significant improvement due to the control of type and content ratio of elements constituting the lithium composite metal oxide, the lithium composite metal oxide may include Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, and any one thereof or a mixture of two or more thereof may be used.

The positive electrode active material may be included in an amount of 80 wt% to 99 wt% in the positive electrode active material layer.

The positive electrode active material layer may further include at least one selected from a binder and a conductive agent together with the positive electrode active material.

The binder is a component that assists in the binding between the active material and the conductive agent and in the binding with the current collector, wherein the binder is commonly added in an amount of 1 wt% to 30 wt% based on a total weight of a positive electrode material mixture. Examples of the binder may be at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, and a fluorine rubber.

The binder may be included in an amount of 1 wt% to 30 wt% in the positive electrode active material layer.

As the conductive agent, any conductive agent, so long as having a conductivity without causing chemical changes in the battery, may be used without particular limitation, and may employ, for example, a conductive material, such as: graphite; carbon-based materials such as carbon black, acetylene black, Ketjen black, channel black, furnace black, lamp black, or thermal black; conductive fibers such as carbon fibers or metal fibers; carbon fluoride; metal powder such asaluminum powder, and nickel powder; conductive whiskers such as zinc oxide whiskers and potassium titanate whiskers; conductive metal oxide such as titanium oxide; or polyphenylene derivatives. Specific examples of a commercially available conductive material may include acetylene black series such as products manufactured by Chevron Chemical or Denka black manufactured by Denka Singapore private limited, products manufactured by Gulf Oil, Ketjen black, EC series manufactured by Armak, Vulcan XC-72 manufactured by Cabot, and Super P manufactured by Timcal.

The conductive agent may be added in an amount of 1 wt% to 30 wt% in the positive electrode active material layer.

The separator separates the negative electrode and the positive electrode and provides a movement path of lithium ions, and any separator may be used as the separator without particular limitation as long as it is typically used in secondary batteries, and particularly, a separator having high moisture-retention ability for an electrolyte as well as low resistance to the transfer of electrolyte ions may be used. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and may be selectively used in a single-layered or a multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable. In this case, the electrolyte may exhibit excellent performance when the cyclic carbonate and the chain carbonate are mixed in a volume ratio of about 1:1 to about 1:9.

The lithium salt may be used without particular limitation as long as it is a compound capable of providing lithium ions used in lithium secondary batteries. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be preferably used in a concentration range of 0.1 M to 2.0 M. When the concentration of the lithium salt is in the above range, the electrolyte has suitable conductivity and viscosity, thereby exhibiting excellent performance, and lithium ions may effectively move.

As described above, since the lithium secondary battery according to the present invention stably exhibits excellent discharge capacity, quick charging characteristics, and capacity retention, the lithium secondary battery is suitable for portable devices, such as mobile phones, laptop computers, and digital cameras, and electric cars such as hybrid electric vehicles (HEVs) and particularly, may be preferably used as a constituent battery of a medium and large sized battery module. Thus, the present invention also provides a medium and large sized battery module including the above-described secondary battery as a unit cell.

The medium and large sized battery module may be preferably used in power sources that require high output and large capacity, such as an electric vehicle, a hybrid electric vehicle, and a power storage system.

Hereinafter, examples of the present invention will be described in detail in such a manner that it may easily be performed by a person with ordinary skill in the art to which the present invention pertains. The invention may, however, be embodied in many different forms and should not be construed as being limited to the examples set forth herein.

### Examples and Comparative Examples

### Example 1: Preparation of negative electrode

### 1. Preparation of first negative electrode active material

Primary artificial graphite particles (average particle diameter (D₅₀): 8 µm) in the form of a single particle were prepared, and the primary artificial graphite particles were mixed with pitch, and then the mixture was heat treated at 1,300 °C for 12 hours to prepare coated artificial graphite particles in which an amorphous carbon coating layer is placed on the primary artificial graphite particles.

The amorphous carbon coating layer was formed in an amount of 4 wt% on the coated artificial graphite particles.

The coated artificial graphite particles had an average particle diameter (D₅₀) of 8 µm.

### 2. Preparation of second negative electrode active material

Uncoated artificial graphite particles (average particle diameter (D₅₀): 20 µm) in the form of secondary particles in which a plurality of primary artificial graphite particles (average particle diameter (D₅₀): 8 µm) were aggregated were prepared.

Specifically, a coke raw material was pulverized into coke having an average particle diameter (D₅₀) of 8 µm, the pulverized coke was mixed with pitch to prepare an intermediate granulated in the form of secondary particles, and the intermediate was subjected to a heat treatment at a temperature gradually raised to 3,000 °C, at a constant temperature of 3,000 °C for 60 hours, and at a temperature gradually down to room temperature for graphitization and secondary granulation, and then an average particle diameter (D₅₀) of the secondary particles was regulated to 20 µm to prepare the uncoated artificial graphite particles. In this case, the total heat treatment time of the intermediate was 2 weeks.

The first negative electrode active material and the second negative electrode active material prepared above were mixed in a weight ratio of 30:70 to prepare a negative electrode active material of Example 1.

The negative electrode active material had an average particle diameter (D₅₀) of 17 µm, a BET specific surface area of 1.4 m²/g, and a tap density of 1.04 g/cm³.

In addition, as measured through X-ray diffraction analysis of the negative electrode active material, La (100), a crystallite size in the a-axis direction, was 242.5 nm, and Lc (002), a crystallite size in the c-axis direction, was 72.5 nm.

### Example 2: Preparation of negative electrode active material

Coated artificial graphite particles were prepared in the same manner as in Example 1, except that primary artificial graphite particles in the form of a single particle having an average particle diameter (D₅₀) of 12 µm were used. The coated artificial graphite particles had an average particle diameter (D₅₀) of 12 µm.

A negative electrode active material of Example 2 was prepared in the same manner as in Example 1, except that the coated artificial graphite particles prepared above were used as a first negative electrode active material.

The negative electrode active material had an average particle diameter (D₅₀) of 18 µm, a BET specific surface area of 1.2 m²/g, and a tap density of 1.07 g/cm³.

In addition, as measured through X-ray diffraction analysis of the negative electrode active material, La (100), a crystallite size in the a-axis direction, was 241.5 nm, and Lc (002), a crystallite size in the c-axis direction, was 71.8 nm.

### Example 3: Preparation of negative electrode active material

Coated artificial graphite particles were prepared in the same manner as in Example 1, except that primary artificial graphite particles in the form of a single particle having an average particle diameter (D₅₀) of 5 µm were used. The coated artificial graphite particles had an average particle diameter (D₅₀) of 5 µm.

A negative electrode active material of Example 3 was prepared in the same manner as in Example 1, except that the coated artificial graphite particles prepared above were used as a first negative electrode active material.

The negative electrode active material had an average particle diameter (D₅₀) of 15 µm, a BET specific surface area of 1.6 m²/g, and a tap density of 1.06 g/cm³.

In addition, as measured through X-ray diffraction analysis of the negative electrode active material, La (100), a crystallite size in the a-axis direction, was 240.5 nm, and Lc (002), a crystallite size in the c-axis direction, was 71.5 nm.

### Example 4: Preparation of negative electrode active material

The same first negative electrode active material and second negative electrode active material as those prepared in Example 1 were prepared, and the first negative electrode active material and the second negative electrode active material were mixed in a weight ratio of 70:30 to prepare a negative electrode active material of Example 4.

The negative electrode active material had an average particle diameter (D₅₀) of 13 µm, a BET specific surface area of 1.8 m²/g, and a tap density of 1.11 g/cm³.

In addition, as measured through X-ray diffraction analysis of the negative electrode active material, La (100), a crystallite size in the a-axis direction, was 242.1 nm, and Lc (002), a crystallite size in the c-axis direction, was 71.4 nm.

### Example 5: Preparation of negative electrode active material

The same first negative electrode active material and second negative electrode active material as those prepared in Example 1 were prepared, and the first negative electrode active material and the second negative electrode active material were mixed in a weight ratio of 15:85 to prepare a negative electrode active material of Example 5.

The negative electrode active material had an average particle diameter (D₅₀) of 19 µm, a BET specific surface area of 1.0 m²/g, and a tap density of 1.01 g/cm³.

In addition, as measured through X-ray diffraction analysis of the negative electrode active material, La (100), a crystallite size in the a-axis direction, was 243.0 nm, and Lc (002), a crystallite size in the c-axis direction, was 71.9 nm.

### Comparative Example 1: Preparation of negative electrode active material

Primary artificial graphite particles (average particle diameter (D₅₀): 8 µm) in the form of a single particle were used as a first negative electrode active material. An amorphous carbon coating layer was not formed on the first negative electrode active material.

A negative electrode active material of Comparative Example 1 was prepared in the same manner as in Example 1, except that the first negative electrode active material was used.

The negative electrode active material had an average particle diameter (D₅₀) of 17 µm, a BET specific surface area of 1.8 m²/g, and a tap density of 0.99 g/cm³.

In addition, as measured through X-ray diffraction analysis of the negative electrode active material, La (100), a crystallite size in the a-axis direction, was 241.3 nm, and Lc (002), a crystallite size in the c-axis direction, was 71.3 nm.

### Comparative Example 2: Preparation of negative electrode active material

### 1. Preparation of first negative electrode active material

Primary artificial graphite particles (average particle diameter (D₅₀): 6 µm) in the form of a single particle were used as a first negative electrode active material. An amorphous carbon coating layer was not formed on the first negative electrode active material.

### 2. Preparation of second negative electrode active material

A second negative electrode active material was prepared in the same manner as in Example 1, except that an average particle diameter (D₅₀) of secondary particles was regulated to 22 µm instead of 20 µm.

The first negative electrode active material and the second negative electrode active material prepared above were mixed in a weight ratio of 30:70 to prepare a negative electrode active material of Comparative Example 2.

The negative electrode active material had an average particle diameter (D₅₀) of 15 µm, a BET specific surface area of 2.1 m²/g, and a tap density of 1.01 g/cm³.

In addition, as measured through X-ray diffraction analysis of the negative electrode active material, La (100), a crystallite size in the a-axis direction, was 242.5 nm, and Lc (002), a crystallite size in the c-axis direction, was 71.6 nm.

### Comparative Example 3: Preparation of negative electrode active material

Only the second negative electrode active material of Example 1 was used as a negative electrode active material of Comparative Example 3.

The negative electrode active material had an average particle diameter (D₅₀) of 20 µm, a BET specific surface area of 1.2 m²/g, and a tap density of 0.97 g/cm³.

In addition, as measured through X-ray diffraction analysis of the negative electrode active material, La (100), a crystallite size in the a-axis direction, was 242.2 nm, and Lc (002), a crystallite size in the c-axis direction, was 71.5 nm.

### Comparative Example 4: Preparation of negative electrode active material

The uncoated artificial graphite particles used in Example 1 were prepared. The uncoated-artificial graphite particles were mixed with pitch, and the mixture was heat treated at 1,300 °C for 12 hours to form an amorphous carbon coating layer on the uncoated-artificial graphite particles, and this was used as a negative electrode active material of Comparative Example 4.

The amorphous carbon coating layer was formed in an amount of 3 wt% with respect to a total weight of the amorphous carbon coating layer and the uncoated artificial graphite particles.

The negative electrode active material had an average particle diameter (D₅₀) of 20 µm, a BET specific surface area of 1.1 m²/g, and a tap density of 0.98 g/cm³.

In addition, as measured through X-ray diffraction analysis of the negative electrode active material, La (100), a crystallite size in the a-axis direction, was 242.6 nm, and Lc (002), a crystallite size in the c-axis direction, was 71.1 nm.

### Comparative Example 5: Preparation of negative electrode active material

Only the first negative electrode active material of Example 1 was used as a negative electrode active material of Comparative Example 5.

The negative electrode active material had an average particle diameter (D₅₀) of 8 µm, a BET specific surface area of 2.0 m²/g, and a tap density of 1.07 g/cm³.

In addition, as measured through X-ray diffraction analysis of the negative electrode active material, La (100), a crystallite size in the a-axis direction, was 242.7 nm, and Lc (002), a crystallite size in the c-axis direction, was 71.8 nm.

### Comparative Example 6: Preparation of negative electrode active material

### 1. Preparation of first negative electrode active material

Primary artificial graphite particles (average particle diameter (D₅₀): 8 µm) in the form of a single particle were used as a first negative electrode active material. An amorphous carbon coating layer was not formed on the first negative electrode active material.

### 2. Preparation of second negative electrode active material

The uncoated artificial graphite particles used in Example 1 were prepared. The uncoated-artificial graphite particles were mixed with pitch, and the mixture was heat treated at 1,300 °C for 12 hours to form an amorphous carbon coating layer on the uncoated-artificial graphite particles, and this was used as a second negative electrode active material of Comparative Example 6.

The amorphous carbon coating layer was formed in an amount of 3 wt% with respect to a total weight of the amorphous carbon coating layer and the uncoated artificial graphite particles.

The second negative electrode active material had an average particle diameter (D₅₀) of 20 µm.

The first negative electrode active material and the second negative electrode active material prepared above were mixed in a weight ratio of 30:70 to prepare a negative electrode active material of Comparative Example 6.

The negative electrode active material had an average particle diameter (D₅₀) of 18 µm, a BET specific surface area of 1.1 m²/g, and a tap density of 1.02 g/cm³.

In addition, as measured through X-ray diffraction analysis of the negative electrode active material, La (100), a crystallite size in the a-axis direction, was 241.6 nm, and Lc (002), a crystallite size in the c-axis direction, was 71.6 nm.

### Comparative Example 7: Preparation of negative electrode active material

A negative electrode active material of Comparative Example 7 was prepared in the same manner as in Example 1, except that the second negative electrode active material prepared in Comparative Example 6 was used instead of the second negative electrode active material of Example 1.

The negative electrode active material had an average particle diameter (D₅₀) of 19 µm, a BET specific surface area of 1.0 m²/g, and a tap density of 1.06 g/cm³.

In addition, as measured through X-ray diffraction analysis of the negative electrode active material, La (100), a crystallite size in the a-axis direction, was 242.3 nm, and Lc (002), a crystallite size in the c-axis direction, was 71.4 nm.

### Comparative Example 8: Preparation of negative electrode active material

Coated artificial graphite particles were prepared in the same manner as in Example 1, except that primary artificial graphite particles in the form of a single particle having an average particle diameter (D₅₀) of 18 µm were used.

The coated artificial graphite particles had an average particle diameter (D₅₀) of 18 µm.

A negative electrode active material of Comparative Example 8 was prepared in the same manner as in Example 1, except that the coated artificial graphite particles prepared above were used as a first negative electrode active material.

The negative electrode active material had an average particle diameter (D₅₀) of 21 µm, a BET specific surface area of 1.1 m²/g, and a tap density of 1.01 g/cm³.

In addition, as measured through X-ray diffraction analysis of the negative electrode active material, La (100), a crystallite size in the a-axis direction, was 242.6 nm, and Lc (002), a crystallite size in the c-axis direction, was 71.9 nm.

### Comparative Example 9: Preparation of negative electrode active material

### 1. Preparation of first negative electrode active material

Coated artificial graphite particles were prepared in the same manner as in Example 1, except that primary artificial graphite particles in the form of a single particle having an average particle diameter (D₅₀) of 5 µm were used. The coated artificial graphite particles had an average particle diameter (D₅₀) of 5 µm.

### 2. Preparation of second negative electrode active material

A second negative electrode active material was prepared in the same manner as in Example 1, except that an average particle diameter (D₅₀) of secondary particles was regulated to 27 µm instead of 20 µm.

The first negative electrode active material and the second negative electrode active material prepared above were mixed in a weight ratio of 30:70 to prepare a negative electrode active material of Comparative Example 9.

The negative electrode active material had an average particle diameter (D₅₀) of 24 µm, a BET specific surface area of 1.1 m²/g, and a tap density of 1.08 g/cm³.

In addition, as measured through X-ray diffraction analysis of the negative electrode active material, La (100), a crystallite size in the a-axis direction, was 242.8 nm, and Lc (002), a crystallite size in the c-axis direction, was 71.3 nm. In the following g/cc should be read as g/cm³.

**[Table 1]**

| | | Example 1 | Example 2 | Example 3 | Example 4 | Example 5 |
|---|---|---|---|---|---|---|
| First negative electrode active material | Coating | O | O | O | O | O |
| | Coating amount (with respect to weight of first negative electrode active material, wt%) | 4 | 4 | 4 | 4 | 4 |
| | Average particle diameter (D₅₀) (µm ) | 8 | 12 | 5 | 8 | 8 |
| Second negative electrode active material | Coating | X | X | X | X | X |
| | Coating amount (with respect to weight of second negative electrode active material, wt%) | - | - | - | - | - |
| | Average particle diameter (D₅₀) (µm ) | 20 | 20 | 20 | 20 | 20 |
| Average particle size ratio (2nd/1st) | | 2.5 | About 1.7 | 4.0 | 2.5 | 2.5 |
| Weight ratio (first negative electrode active material: second negative electrode active material) | | 30:70 | 30:70 | 30:70 | 70:30 | 15:85 |
| Average particle diameter (D₅₀) (µm) | | 17 | 18 | 15 | 13 | 19 |
| BET specific surface area (m²/g) | | 1.4 | 1.2 | 1.6 | 1.8 | 1.0 |
| Tap density (g/cc) | | 1.04 | 1.07 | 1.06 | 1.11 | 1.01 |
| La (100) (nm) | | 242.5 | 241.5 | 240.5 | 242.1 | 243.0 |
| Lc (002) (nm) | | 72.5 | 71.8 | 71.5 | 71.4 | 71.9 |

**[Table 2]**

| | | Comparative Example 1 | Comparative Example 2 | Comparative Example 3 | Comparative Example 4 | Comparative Example 5 |
|---|---|---|---|---|---|---|
| First negative electrode active material | Coating | X | X | - | - | O |
| | Coating amount (with respect to weight of first negative electrode active material, wt%) | - | - | - | - | 4 |
| | Average particle diameter (D₅₀) (µm) | 8 | 6 | - | - | 8 |
| Second negative electrode active material | Coating | X | X | X | O | - |
| | Coating amount (with respect to weight of second negative electrode active material, wt%) | - | - | - | 3 | - |
| | Average particle diameter (D₅₀) (µm) | 20 | 22 | 20 | 20 | - |
| Average particle size ratio (2nd/1st) | | 2.5 | About 3.7 | - | - | - |
| Weight ratio (first negative electrode active material: second negative electrode active material) | | 30:70 | 30:70 | 0:100 | 0:100 | 100:0 |
| Average particle diameter (D₅₀) (µm) | | 17 | 15 | 20 | 20 | 8 |
| BET specific surface area (m²/g) | | 1.8 | 2.1 | 1.2 | 1.1 | 2.0 |
| Tap density (g/cc) | | 0.99 | 1.01 | 0.97 | 0.98 | 1.07 |
| La (100) (nm) | | 241.3 | 242.5 | 242.2 | 242.6 | 242.7 |
| Lc (002) (nm) | | 71.3 | 71.6 | 71.5 | 71.1 | 71.8 |

**[Table 3]**

| | | Comparative Example 6 | Comparative Example 7 | Comparative Example 8 | Comparative Example 9 |
|---|---|---|---|---|---|
| First negative electrode active material | Coating | X | O | O | O |
| | Coating amount (with respect to weight of first negative electrode active material, wt%) | - | 4 | 4 | 4 |
| | Average particle diameter (D₅₀) (µm) | 8 | 8 | 18 | 5 |
| Second negative electrode active material | Coating | O | O | X | X |
| | Coating amount (with respect to weight of second negative electrode active material, wt%) | 3 | 3 | - | - |
| | Average particle diameter (D₅₀) (µm) | 20 | 20 | 20 | 27 |
| Average particle size ratio (2nd/1st) | | 2.5 | 2.5 | About 1.1 | 5.4 |
| Weight ratio (first negative electrode active material: second negative electrode active material) | | 30:70 | 30:70 | 30:70 | 30:70 |
| Average particle diameter (D₅₀) (µm) | | 18 | 19 | 21 | 24 |
| BET specific surface area(m²/g) | | 1.1 | 1.0 | 1.1 | 1.1 |
| Tap density (g/cc) | | 1.02 | 1.06 | 1.01 | 1.08 |
| La (100) (nm) | | 241.6 | 242.3 | 242.6 | 242.8 |
| Lc (002) (nm) | | 71.6 | 71.4 | 71.9 | 71.3 |

### Experimental Example

### <Preparation of negative electrode>

### 1. Preparation of negative electrode

The negative electrode active material prepared in Example 1, styrene-butadiene rubber as a binder, carbon black as a conductive material, and carboxymethylcellulose (CMC) as a thickener were added to water as a solvent in a weight ratio of 94:3:1:2 to prepare a negative electrode slurry. The negative electrode slurry was applied onto an 8 µm-thick copper foil (negative electrode current collector) in a loading amount of 14mg/cm² and then dried. In this case, a temperature of circulating air was 130 °C. Subsequently, the collector on which the negative electrode slurry had been applied was roll pressed, dried in a vacuum oven set at 130 °C for 1 hour, and punched into a rectangle with a size of 15.2 cm², thereby preparing a negative electrode (roll pressing density: 1.78 g/cm³) of Example 1 including a negative electrode active material layer.

Negative electrodes of Examples 2 to 5 and Comparative Examples 1 to 9 were prepared in the same manner as in Example 1, except that the negative electrode active materials of Examples 2 to 5 and Comparative Examples 1 to 9 were used instead of the negative electrode active material of Example 1.

### Experimental Example 1: Output performance evaluation

### <Preparation of full cell secondary battery>

LCO as a positive electrode active material, a carbon black-based conductive material, and PVDF powder as a binder were mixed in a weight ratio of 92:2:6 in a N-methyl-2 pyrrolidone solvent to prepare a positive electrode slurry.

The prepared positive electrode slurry was applied onto a 15 µm-thick positive electrode current collector so that a loading amount (mg/cm²) was 23.4 mg per unit area, dried in a vacuum oven set at 130 °C for 1 hour, and roll pressed at a pressure of 15 MPa while passing through rollers heated at 80 °C, thereby preparing a positive electrode having a final roll pressing density of 3.8 g/cm³.

A porous polyethylene separator was placed between each of the negative electrodes prepared in Examples 1 to 5 and Comparative Examples 1 to 9 and the positive electrode, an electrode assembly was prepared in a stacking manner, the electrode assembly was housed in an aluminum pouch type battery case, and an electrolyte (ethylene carbonate (EC)/ethyl methyl carbonate (EMC)=1:4 (volume ratio), lithium hexafluorophosphate (LiPF₆ 1 M), and vinylidene carbonate (VC) in an amount of 0.5 wt% with respect to the weight of the electrolyte) was injected, thereby preparing individual full cell lithium secondary batteries.

### <Output performance evaluation>

The full cell secondary batteries of Examples 1 to 5 and Comparative Examples 1 to 9 prepared above were charged with 0.33 C up to 4.4 V, and then resistance increase rate (%) was measured by voltage reduction/applied current through a voltage drop generated through discharging for 10 seconds with 2.5 C pulse in the condition of setting SOC to 50%. The results are presented in Table 4 below.

### Experimental Example 2: Evaluation of quick charging performance

The full cell secondary batteries of Examples 1 to 5 and Comparative Examples 1 to 9 prepared in Experimental Example 1 were subjected to cycle charging/discharging at 45 °C to measure capacity retention at 100th cycles and quick charging performance was evaluated.

Specifically, the full cell secondary batteries of Examples 1 to 5 and Comparative Examples 1 to 9 were charged and discharged up to the 100th cycle under the conditions of charging (CC/CV mode, 1 C charge, cut-off at 0.005 V and 0.005 C) and discharging (CC mode, 0.5 C discharge, cut-off at 1.5 V).

The capacity retention was evaluated through the following Equation, and the results are shown in Table 4. 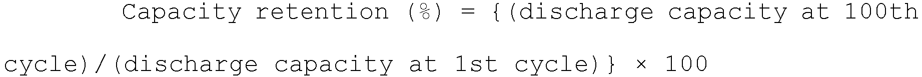 Capacity retention (%) = { (discharge capacity at 100th cycle)/(discharge capacity at 1st cycle)} × 100

**[Table 4]**

| | Experimental Example 1 | Experimental Example 2 |
|---|---|---|
| | Resistance increase rate (%) | Capacity retention (%) |
| Example 1 | 16 | 87 |
| Example 2 | 19 | 83 |
| Example 3 | 21 | 81 |
| Example 4 | 27 | 78 |
| Example 5 | 21 | 80 |
| Comparative Example 1 | 34 | 66 |
| Comparative Example 2 | 39 | 63 |
| Comparative Example 3 | 44 | 60 |
| Comparative Example 4 | 35 | 68 |
| Comparative Example 5 | 52 | 55 |
| Comparative Example 6 | 30 | 74 |
| Comparative Example 7 | 33 | 71 |
| Comparative Example 8 | 41 | 65 |
| Comparative Example 9 | 39 | 61 |

Referring to Table 4, it is seen that Examples 1 to 5, which are negative electrodes according to the present invention, show significantly greater output performance and quick charging performance than the negative electrodes of Comparative Examples 1 to 9.

## Claims

1. A negative electrode comprising:
a negative electrode current collector; and
a negative electrode active material layer disposed on at least one surface of the negative electrode current collector,
wherein the negative electrode active material layer comprises a negative electrode active material,
wherein the negative electrode active material comprises a first negative electrode active material and a second negative electrode active material,
wherein the first negative electrode active material is coated artificial graphite particles comprising primary artificial graphite particles and an amorphous carbon coating layer positioned on the primary artificial graphite particles,
wherein the second negative electrode active material is uncoated artificial graphite particles in the form of secondary particles in which two or more primary artificial graphite particles are assembled,
wherein a ratio of an average particle diameter (D₅₀) of the second negative electrode active material to an average particle diameter (D₅₀) of the first negative electrode active material ranges from 1.2 to 4.7, the particle diameter being measured by a laser diffraction method.
**characterized in that**
in XRD analysis of the negative electrode active material, a crystallite size La (100) in an a-axis direction ranges from 200 nm to 300 nm, and a crystallite size Lc (002) in a c-axis direction ranges from 50 nm to 100 nm.

2. The negative electrode of claim 1, wherein the ratio of the average particle diameter (D₅₀) of the second negative electrode active material to the average particle diameter (D₅₀) of the first negative electrode active material ranges from 2.0 to 3.5.

3. The negative electrode of claim 1, wherein the average particle diameter (D₅₀) of the first negative electrode active material ranges from 4 µm to 13 µm.

4. The negative electrode of claim 1, wherein the first negative electrode active material comprises the amorphous carbon coating layer in an amount of 1 wt% to 10 wt%.

5. The negative electrode of claim 1, wherein the second negative electrode active material consists of the uncoated artificial graphite particles.

6. The negative electrode of claim 1, wherein the average particle diameter (D₅₀) of the second negative electrode active material ranges from 15 µm to 25 µm.

7. The negative electrode of claim 1, wherein the uncoated artificial graphite particles are formed as two or more primary artificial graphite particles having an average particle diameter (D₅₀) of 7 µm to 10 µm are assembled.

8. The negative electrode of claim 1, wherein the negative electrode active material layer comprises the first negative electrode active material and the second negative electrode active material in a weight ratio ranging from 10:90 to 80:20.

9. The negative electrode of claim 1, wherein the negative electrode active material has an average particle diameter (D₅₀) ranging from 12 µm to 20 µm.

10. The negative electrode of claim 1, wherein the negative electrode active material has a BET specific surface area ranging from 0.1 m²/g to 3.0 m²/g.

11. The negative electrode of claim 1, wherein the negative electrode active material has a tap density ranging from 1.00 g/cm³ to 1.20 g/cm³

12. The negative electrode of claim 1, wherein the negative electrode has a roll pressing density ranging from 1.5 g/ cm³ to 2.0 g/cm3.

13. A secondary battery comprising:
a negative electrode according to claim 1;
a positive electrode facing the negative electrode;
a separator disposed between the negative electrode and the positive electrode; and
an electrolyte.

## Patentansprüche

1. Negative Elektrode, umfassend:
einen Negativelektrodenstromkollektor; und
eine Negativelektrodenaktivmaterialschicht, die auf mindestens einer Oberfläche des Negativelektrodenstromkollektors angeordnet ist,
wobei die Negativelektrodenaktivmaterialschicht ein Negativelektrodenaktivmaterial umfasst,
wobei das Negativelektrodenaktivmaterial ein erstes Negativelektrodenaktivmaterial und ein zweites Negativelektrodenaktivmaterial umfasst,
wobei das erste Negativelektrodenaktivmaterial beschichtete künstliche Graphitpartikel ist, die primäre künstliche Graphitpartikel und eine amorphe Kohlenstoffbeschichtungsschicht umfassen, die auf den primären künstlichen Graphitpartikeln angeordnet ist,
wobei das zweite Negativelektrodenaktivmaterial unbeschichtete künstliche Graphitpartikel in Form von Sekundärpartikeln ist, in denen zwei oder mehr primäre künstliche Graphitpartikel zusammengefügt sind,
wobei ein Verhältnis eines mittleren Partikeldurchmessers (D₅₀) des zweiten Negativelektrodenaktivmaterials zu einem mittleren Partikeldurchmesser (D₅₀) des ersten Negativelektrodenaktivmaterials von 1,2 bis 4,7 reicht, wobei der Partikeldurchmesser durch ein Laserbeugungsverfahren gemessen wird.
**dadurch gekennzeichnet, dass**
bei der XRD-Analyse des Negativelektrodenaktivmaterials eine Kristallitgröße La (100) in einer a-Achsen-Richtung von 200 nm bis 300 nm reicht, und eine Kristallitgröße Lc (002) in einer c-Achsen-Richtung von 50 nm bis 100 nm reicht.

2. Negative Elektrode nach Anspruch 1, wobei das Verhältnis des mittleren Partikeldurchmessers (D₅₀) des zweiten Negativelektrodenaktivmaterials zu dem mittleren Partikeldurchmesser (D₅₀) des ersten Negativelektrodenaktivmaterials von 2,0 bis 3,5 reicht.

3. Negative Elektrode nach Anspruch 1, wobei der mittlere Partikeldurchmesser (D₅₀) des ersten Negativelektrodenaktivmaterials von 4 µm bis 13 µm reicht.

4. Negative Elektrode nach Anspruch 1, wobei das erste Negativelektrodenaktivmaterial die amorphe Kohlenstoffbeschichtungsschicht in einer Menge von 1 Gew.-% bis 10 Gew.-% umfasst.

5. Negative Elektrode nach Anspruch 1, wobei das zweite Negativelektrodenaktivmaterial aus den unbeschichteten künstlichen Graphitpartikeln besteht.

6. Negative Elektrode nach Anspruch 1, wobei der mittlere Partikeldurchmesser (D₅₀) des zweiten Negativelektrodenaktivmaterials von 15 µm bis 25 µm reicht.

7. Negative Elektrode nach Anspruch 1, wobei die unbeschichteten künstlichen Graphitpartikel so gebildet sind, dass zwei oder mehr primäre künstliche Graphitpartikel, die einen mittleren Partikeldurchmesser (D₅₀) von 7 µm bis 10 µm aufweisen, zusammengefügt sind.

8. Negative Elektrode nach Anspruch 1, wobei die Negativelektrodenaktivmaterialschicht das erste Negativelektrodenaktivmaterial und das zweite Negativelektrodenaktivmaterial in einem Gewichtsverhältnis umfasst, das von 10:90 bis 80:20 reicht.

9. Negative Elektrode nach Anspruch 1, wobei das Negativelektrodenaktivmaterial einen mittleren Partikeldurchmesser (D₅₀) aufweist, der von 12 µm bis 20 µm reicht.

10. Negative Elektrode nach Anspruch 1, wobei das Negativelektrodenaktivmaterial eine BET-spezifische Oberfläche aufweist, die von 0,1 m²/g bis 3,0 m²/g reicht.

11. Negative Elektrode nach Anspruch 1, wobei das Negativelektrodenaktivmaterial eine Stampfdichte aufweist, die von 1,00 g/cm³ bis 1,20 g/cm³ reicht.

12. Negative Elektrode nach Anspruch 1, wobei die negative Elektrode eine Pressdichte von 1,5 g/cm³ bis 2,0 g/cm³ aufweist.

13. Sekundärbatterie, umfassend:
eine negative Elektrode nach Anspruch 1;
eine positive Elektrode, die der negativen Elektrode gegenüberliegt;
einen Separator, der zwischen der negativen Elektrode und der positiven Elektrode angeordnet ist; und
einen Elektrolyten.

## Revendications

1. Électrode négative comprenant :
un collecteur de courant d'électrode négative ; et
une couche de matériau actif d'électrode négative disposée sur au moins une surface du collecteur de courant d'électrode négative,
dans laquelle la couche de matériau actif d'électrode négative comprend un matériau actif d'électrode négative,
dans laquelle le matériau actif d'électrode négative comprend un premier matériau actif d'électrode négative et un second matériau actif d'électrode négative,
dans laquelle le premier matériau actif d'électrode négative présente des particules de graphite artificiel revêtues comprenant des particules primaires de graphite artificiel et une couche de revêtement de carbone amorphe positionnée sur les particules primaires de graphite artificiel,
dans laquelle le second matériau actif d'électrode négative présente des particules de graphite artificiel non revêtues sous la forme de particules secondaires dans lesquelles deux ou plusieurs particules primaires de graphite artificiel sont assemblées,
dans laquelle un rapport entre un diamètre moyen de particules (D₅₀) du second matériau actif d'électrode négative et un diamètre moyen de particules (D₅₀) du premier matériau actif d'électrode négative est compris de 1,2 à 4,7, le diamètre de particule étant mesuré par une méthode de diffraction laser.
**caractérisée en ce que**
dans l'analyse par diffraction des rayons X (XRD) du matériau actif d'électrode négative, une taille de cristallite La (100) dans une direction de l'axe a est comprise de 200 nm à 300 nm, et une taille de cristallite Lc (002) dans une direction de l'axe c est comprise de 50 nm à 100 nm.

2. Électrode négative selon la revendication 1, dans laquelle le rapport entre le diamètre moyen de particules (D₅₀) du second matériau actif d'électrode négative et le diamètre moyen de particules (D₅₀) du premier matériau actif d'électrode négative est compris de 2,0 à 3,5.

3. Électrode négative selon la revendication 1, dans laquelle le diamètre moyen de particules (D₅₀) du premier matériau actif d'électrode négative est compris de 4 µm à 13 µm.

4. Électrode négative selon la revendication 1, dans laquelle le premier matériau actif d'électrode négative comprend la couche de revêtement de carbone amorphe en une quantité de 1 % en poids à 10 % en poids.

5. Électrode négative selon la revendication 1, dans laquelle le second matériau actif d'électrode négative consiste en particules de graphite artificiel non revêtues.

6. Électrode négative selon la revendication 1, dans laquelle le diamètre moyen de particules (D₅₀) du second matériau actif d'électrode négative est compris de 15 µm à 25 µm.

7. Électrode négative selon la revendication 1, dans laquelle les particules de graphite artificiel non revêtues sont formées lorsque deux ou plusieurs particules primaires de graphite artificiel ayant un diamètre moyen de particules (D₅₀) de 7 µm à 10 µm sont assemblées.

8. Électrode négative selon la revendication 1, dans laquelle la couche de matériau actif d'électrode négative comprend le premier matériau actif d'électrode négative et le second matériau actif d'électrode négative selon un rapport pondéral compris de 10:90 à 80:20.

9. Électrode négative selon la revendication 1, dans laquelle le matériau actif d'électrode négative a un diamètre moyen de particules (D₅₀) compris de 12 µm à 20 µm.

10. Électrode négative selon la revendication 1, dans laquelle le matériau actif d'électrode négative a une surface spécifique BET comprise de 0,1 m²/g à 3,0 m²/g.

11. Électrode négative selon la revendication 1, dans laquelle le matériau actif d'électrode négative a une masse volumique après tassement comprise de 1,00 g/cm³ à 1,20 g/cm³.

12. Électrode négative selon la revendication 1, dans laquelle l'électrode négative a une densité de pressage au rouleau comprise de 1,5 g/cm³ à 2,0 g/cm³.

13. Batterie secondaire comprenant :
une électrode négative selon la revendication 1 ;
une électrode positive faisant face à l'électrode négative ;
un séparateur disposé entre l'électrode négative et l'électrode positive ; et
un électrolyte.
